Europäisches Patentamt

European Patent Office

Office européen des brevets

(19)

(11) Veröffentlichungsnummer : **0 135 164 B1**

(12) **EUROPÄISCHE PATENTSCHRIFT**

(45) Veröffentlichungstag der Patentschrift :
11.11.87

(21) Anmeldenummer : 84109904.7

(22) Anmeldetag : 20.08.84

(51) Int. Cl.⁴ : **H 04 J  9/00**, H 04 B  17/00

(54) **Übertragungssystem für digitale Signale hoher Schrittgeschwindigkeit mit Zusatzsignalübertragung.**

(30) Priorität : 25.08.83 DE 3330683

(43) Veröffentlichungstag der Anmeldung :
27.03.85 Patentblatt 85/13

(45) Bekanntmachung des Hinweises auf die Patenterteilung : 11.11.87 Patentblatt 87/46

(84) Benannte Vertragsstaaten :
AT BE CH DE FR GB IT LI NL

(56) Entgegenhaltungen :
EP-A- 0 042 229
DE-A- 2 753 420
US-A- 4 079 203

(73) Patentinhaber : **Siemens Aktiengesellschaft Berlin
und München
Wittelsbacherplatz 2
D-8000 München 2 (DE)**

(72) Erfinder : **Dömer, Josef, Dipl.-Ing.
Flossgatter 18
D-8021 Hohenschäftlarn (DE)**
Erfinder : **Lang, Karl
Seerosenstrasse 2
D-8000 München 45 (DE)**
Erfinder : **Thanhäuser, Gerhard, Dipl.-Ing.
Mozartstrasse 9
D-8905 Mering (DE)**

## Beschreibung

Die Erfindung betrifft ein Übertragungssystem für digitale Signale hoher Schrittgeschwindigkeit mit Zwischenregeneratoren und mit Leitungsendgeräten, die jeweils Phasenregelschleifen mit einem Taktgenerator enthalten, bei dem zur Bildung eines Übertragungskanals für Zusatzsignale sendeseitig eine Phasenmodulation der Taktimpulse für die abgehenden digitalen Signale erfolgt, in dem dem Steuereingang eines im sendeseitigen Leitungsendgerät enthaltenden Taktgenerators über eine Addierstufe die Zusatzsignale zugeführt werden, wobei der eine Eingang der Addierstufe mit dem Ausgang eines in der sendeseitigen Phasenregelschleife enthaltenden Phasendiskriminators und der andere Eingang der Addierstufe mit dem Eingang für die Zusatzsignale verbunden ist, bei dem empfangsseitig die Zusatzsignale aus der Regelspannung der Phasenregelschleife des empfangsseitigen Leitungsendgerätes ausgefiltert werden, und bei dem die Zwischenregeneratoren für die durch die Zusatzsignale erzeugten Phasenschwankungen der digitalen Signalimpulse durchlässig sind.

Übertragungssysteme für digitale Signale benötigen zusätzlich zu den Übertragungskanälen für die Nutzsignale Möglichkeiten, vergleichsweise schmalbandige Signale beispielsweise von Überwachungseinrichtungen oder von Ersatzschalteinrichtungen zu Leitungsendgeräten zu übertragen. Bekannt ist in diesem Zusammenhang aus der DE-A-27 53 420 ein Meldekanal für die Überwachungseinrichtungen eines digitalen Systems, wobei dieser Meldekanal das fünfte, sechste und siebente Bit des Meldewortes im Zeitmultiplexrahmen verwendet. In diesen Bits kann die Adresse eines gestörten Kanals übermittelt werden und dadurch die Umschaltung auf einen ungestörten Ersatzkanal in den Endstellen veranlaßt werden. Die verwendeten drei Bits des einmal im Zeitmultiplexrahmen auftretenden Meldewortes ergeben nur eine geringe Übertragungskapazität ; bei einer Reihe von digitalen Systemen stehen diese Bits dafür auch nicht zur Verfügung, so daß allgemein der Wunsch nach Übertragungsmöglichkeit für Zusatzsignale geringer Schrittgeschwindigkeit besteht, wobei diese wenig aufwendig und ohne größere Eingriffe in das System realisiert werden sollen. Es ist in diesem Zusammenhang naheliegend, die Bitraten des Übertragungssystems zu erhöhen, um Platz für Zusatzsignale zu schaffen, dies erfordert jedoch einen erheblichen Aufwand und die Verwendung zusätzlicher Speicher oder Multiplexeinrichtungen. Schwierigkeiten können sich dabei insbesondere dadurch ergeben, daß zur Anpassung an die Betriebseigenschaften der verwendeten Übertragungsmedien (also beispielsweise eines Koaxialkabels oder eines Lichtwellenleiters) in den Leitungsendgeräten eine zusätzliche blockweise Umcodierung der digitalen Signale erfolgt.

Aus der EP-A-42 229 ist bereits ein Übertragungssystem für digitale Signale hoher Schrittgeschwindigkeit bekannt, das zwischen Leitungsendgeräten angeordnete Zwischenregeneratoren enthält und bei dem ein Übertragungskanal für Zusatzsignale vorgesehen ist. Die Zusatzsignale werden dabei durch Phasenmodulation der Bitrate der digitalen Nutzsignale übertragen. Die Phasenmodulation erfolgt mittels eines elastischen Speichers in Form eines FIRST IN-FIRST OUT-Schieberegisters, dessen Auslese-Bittakt sendeseitig moduliert und empfangsseitig demoduliert wird. Voraussetzung ist dabei, daß die Zwischenregeneratoren für die durch die Zusatzsignale erzeugten Phasenschwankungen der digitalen Signalimpulse durchlässig sind.

Auch aus der US-A-407 203 ist ein Übertragungssystem für digitale Signale bekannt, daß einen Übertragungskanal für Zusatzsignale enthält. Die Zusatzsignalübertragung erfolgt ebenfalls durch Modulation der Bitrate der digitalen Nutzsignale. Die Zusatzsignale werden dabei über einen Verstärker und einen Kondensator mit den Ausgangssignalen eines Phasendiskriminators addiert und einem Taktgenerator zugeführt. Dieser Taktgenerator steuert ebenfalls den Bittakt, mit den die Übertragungssignale aus einem Zwischenspeicher in Form eines FIRST IN-FIRST OUT-Schieberegisters ausgelesen werden. Im Empfänger ist mit dem Ausgang des Phasendiskriminators der Steuersignaleingang des Taktgenerators und außerdem über einen Kondensator der Eingang eines Auskoppelverstärkers verbunden, an dessem Ausgang das demodulierte Zusatzsignal entnehmbar ist.

Nach den Normen der verschiedenen Postbehörden und nach den Empfehlungen des CCITT (insbesondere Empfehlung G703) sind zwischen den Hauptteilen der Übertragungssysteme also insbesondere zwischen den Vermittlungseinrichtungen, den Multiplexeinrichtungen und den Leitungsendgeräten digitale Schnittstellen vorgeschrieben, an denen das Signal in einen bestimmten Code und mit einem bestimmten Pegel übertragen wird. Der Schnittstellencode kann nun für die nachfolgende Übertragung über eine Leitung ungeeignet sein. In der Fig. 1 ist das Blockschaltbild eines aus der DE-A-29 44 377 bekannten Leitungsendgerätes dargestellt, in dem an eine digitale Schnittstelle DS sendeseitig ein Empfangsinterface EI, ein sendeseitiger Codeumsetzer CUS und ein Sendeverstärker SV angeschlossen sind. An den Sendeverstärker schließt sich über eine Leitungsschnittstelle LS das Koaxialkabel oder ein Lichtwellenleiterkabel an. Empfangsseitig schließt sich an die Leitungsschnittstelle LS ein Empfangsregenerator ER für die von der Leitung empfangenen Signale, ein empfangsseitiger Codeumsetzer CUE und ein Sendeinterface SI an. In den Codeumsetzern erfolgt eine blockweise Umcodierung der vom Empfangsinterface bzw. vom Empfangsregenerator abgegebenen Signale. Für Koaxialkabel als Übertragungsmedium kann beispielsweise eine Umsetzung von vier Binärsignalen in drei ternäre Signale erfolgen, für Lichtwellenleiterkabel als Übertragungsmedium werden fünf Binärsignale in sechs Binärsignale umgeformt. Die Einfügung eines schmalbandigen Zusatzkanals durch Einbeziehung in die zu übertragenden digitalen Signale ist in einem solchen Fall vergleichsweise aufwendig und schwierig.

In der DE-A-29 44 377 wird ein Verfahren zur Jitterreduzierung bei der blockweisen Umcodierung digitaler Signale beschrieben, bei der die umzucodierenden Signale mittels einer Serien-Parallel-Wandlung in Signalblöcke umgewandelt, diese umcodiert und die umcodierten Signalblöcke nach einer Parallel-Serien-Wandlung wieder abgegeben werden. Die Serien-Parallel-Wandlung erfolgt mittels eines Schieberegisters, in das die umzucodierenden Signale seriell einlaufen und von den einzelnen Stufenausgängen im Worttakt für ein Wort gemeinsam abgerufen werden können. Die Umcodierung kann dabei mittels einer Umcodierlogik erfolgen, deren Stufeneingänge mit zugeordneten Stufenausgängen des Serien-Parallel-Wandlers verbunden sind, es kann auch ein Zwischenspeicher zwischengeschaltet sein. Dieser Zwischenspeicher kann auch nach der Umcodierlogik angeordnet werden, so daß die umcodierten Signale von den Stufenausgängen der Umcodierlogik oder des Zwischenspeichers an einen Parallel-Serien-Wandler abgegeben werden, an dessen Ausgang sich der Sendeverstärker SV anschließt. Empfangsseitig erfolgt eine entsprechende Umcodierung von beispielsweise ternären Signalen in binäre Signale. Die für die Umcodierung benötigten Taktsignale werden mittels einer Phasenregelschleife erzeugt, die einen örtlichen Taktgenerator, einen Taktteiler und einen Phasendiskriminator enthält. Im Phasendiskriminator erfolgt in bekannter Weise der Vergleich örtlich erzeugter Taktsignale mit dem Takt des Empfangssignals.

Die Aufgabe der Erfindung besteht also darin, für ein Übertragungssystem für digitale Signale mit dem vorstehend geschilderten Aufbau der Leitungsendgeräte einen möglichst wenig aufwendigen Übertragungskanal für Zusatzsignale niedriger Schrittgeschwindigkeit zu schaffen.

Erfindungsgemäß wird die Aufgabe dadurch gelöst, daß die Leitungsendgeräte zur blockweisen Umcodierung der digitalen Signale jeweils einen sende- und einen empfangsseitigen Codeumsetzer aufweisen und diese Codeumsetzer jeweils zwischen einem empfangsseitigen Serien-Parallel-Wandler und einen sendeseitigen Parallel-Serien-Wandler eine Umcodierlogik und einen Zwischenspeicher in frei wählbarer Folge enthalten, die Zusatzsignale über eine Preemphasisstufe in den sendeseitigen Codeumsetzer eingekoppelt werden und dabei die Modulationsfrequenz mit der die zu übertragenden Zusatzsignale vorliegen, wenigstens annähernd dem geometrischen Mittel zwischen der Grenzfrequenz der schmalbandigen Phasenregelschleife im sendeseitigen Codeumsetzer und der Grenzfrequenz der Phasenregelschleife der nachgeschaltete Zwischenregeneratoren entspricht, daß der Phasendiskriminator zur Wiedergewinnung der Zusatzsignale in einem empfangsseitigen Codeumsetzer enthalten ist und daß die Güte der Phasenregelschleife in beiden Codeumsetzern gegenüber einem Übertragungssystem ohne Übertragungskanal für Zusatzsignale wesentlich erhöht ist.

Das erfindungsgemäße Übertragungssystem bietet in vorteilhafter Weise die Möglichkeit, sowohl digitale als auch analoge Zusatzsignale mit einer gegenüber den digitalen Signale vergleichsweise niedrigen Geschwindigkeit zu übertragen.

Zweckmäßige Weiterbildungen des erfindungsgemäßen Übertragungssystems sind in den Patentansprüchen 2 bis 4 näher beschrieben.

Die Erfindung soll im folgenden anhand der Zeichnung näher erläutert werden.

In der Zeichnung zeigt

Fig. 1 das Blockschaltbild eines Leitungsendgerätes,

Fig. 2 ein detaillierteres Schaltbild des im Leitungsendgerät nach Fig. 1 enthaltenen sendeseitigen Codeumsetzer,

Fig. 3 die im Codeumsetzer nach Fig. 2 enthaltende Zusatzkanal-Einkopplung,

Fig. 4 ein Bodediagramm zur Zusatzkanal-Einkopplung nach Fig. 3,

Fig. 5 ein Schaltbeispiel für eine Preemphasis-Schaltstufe,

Fig. 6 ein detailliertes Schaltbild eines Leitungsendgerät nach Fig. 1 enthaltenen empfangsseitigen Codeumsetzer und

Fig. 7 ein detailliertes Schaltbild für die Zusatzsignal-Auskopplung im empfangsseitigen Codeumsetzer nach Fig. 6.

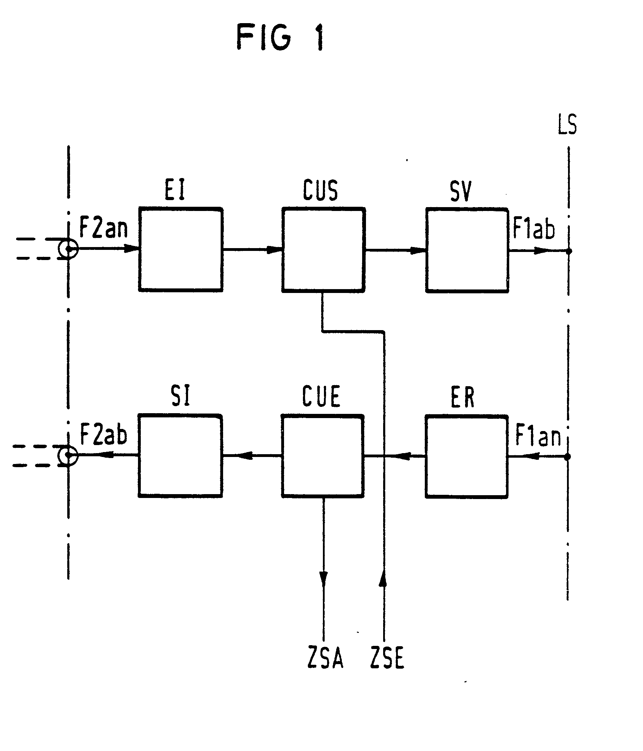

Die Fig. 1 in der vorliegenden Anmeldung entspricht der Fig. 1 der DE-A-29 44 377, sie ist bei der Darstellung des Standes der Technik bereits ausführlich erläutert worden.

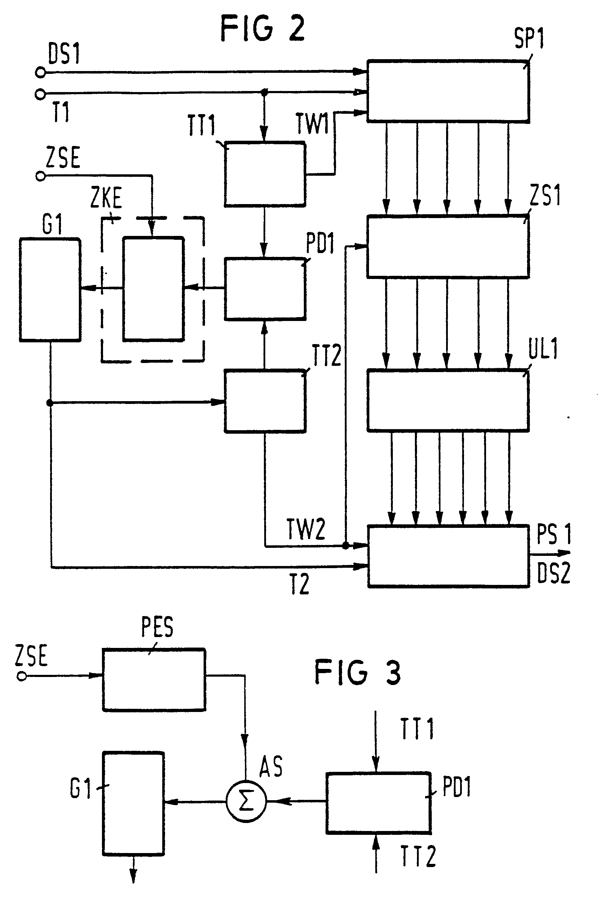

Die Fig. 2 der vorliegenden Patentanmeldung entspricht weitgehend der Fig. 2 der DE-A-29 44 377. In der Fig. 2 ist mit DS1 der Eingang für die umzucodierenden digitalen Signale bezeichnet, der mit einem Serieneingang eines ersten Schieberegisters SP1 verbunden ist. Mit T1 ist ein Takteingang des sendeseitigen Umcodierers CUS bezeichnet, an den ein Takteingang eines ersten Taktteilers TT1 und ein Takteingang des ersten Serien-Parallel-Wandlers SP1 angeschlossen sind. Im ersten Taktteiler TT1 mit einem Teilerverhältnis von 5 : 1 entsprechend der Anzahl der Zeichenelemente pro Signalwort wird ein erster Worttakt TW1 erzeugt und einem entsprechenden Eingang des ersten Serien-Parallel-Wandlers zugeführt, außerdem wird dieser erste Worttakt an den einen Eingang eines ersten Phasendiskriminators PD1 abgegeben. Die an den einzelnen Stufenausgängen des ersten Serien-Parallel-Wandlers SP1 anstehenden Signale werden mit dem ersten Worttakt parallelen Eingängen eines ersten Zwischenspeichers ZS1 aus 5D-Flipflops zugeführt und von diesem mit einem zweiten Worttakt TW2 an eine erste Umcodierlogik UL1 abgegeben, die aus einem ROM besteht, das entsprechend der Codetabelle programmiert ist.

Der zweite, örtlich erzeugte Worttakt stammt von einem zweiten Taktteiler TT2, der die Taktsignale eines örtlichen Taktgenerators G1 im Verhältnis 6 : 1 auf den benötigten Worttakt herunterteilt und diesen Worttakt außerdem einem zweiten Eingang des ersten Phasendiskriminators PD1 zuführt. Der vom örtlichen Taktgenerator G1 erzeugte zweite Schrittakt T2 wird zusätzlich einem ersten Parallel-Serien-Wandler PS1 zugeführt, der die umcodierten Signale von entsprechenden Ausgängen der ersten Umcodierlogik UL1 übernimmt und seriell an einen Ausgang DS2 für die umcodierten Signale abgibt. Beim genannten Stand der Technik ist der Ausgang des ersten Phasendiskriminators PD1 direkt mit einem Steuereingang des ersten Taktgenerators G1 verbunden, sodaß sich über dem zweiten Taktteiler TT2 eine bekannte Phasenregelschleife ergibt. Entsprechend der Erfindung ist nun in dieser Verbindung eine Zusatzsignaleinkopplung ZKE eingefügt, deren einer Eingang mit einem Eingang ZSE für die einzukoppelnden Signale und deren anderer Eingang mit dem Phasendiskriminatorausgang verbunden ist.

In der Fig. 3 ist die Zusatzsignaleinkopplung ZKE zusammen mit Teilen der Phasenregelschleife genauer dargestellt. Es sind wiederum der erste Taktgenerator G1, der erste Phasendiskriminator PD1 mit seinen mit den Taktteilern TT1 und TT2 verbundenen Eingängen und der Eingang ZSE für das Zusatzsignal erkennbar. Mit diesem Eingang ist eine Preemphasistufe PES verbunden, deren Ausgang an einen ersten Eingang eines Analogsummierers AS angeschlossen ist. Der andere Eingang des Analogsummierers ist mit dem Phasendiskriminatorausgang verbunden, der Summiererausgang ist an den Steuereingang des ersten Taktgenerators G1 angekoppelt.

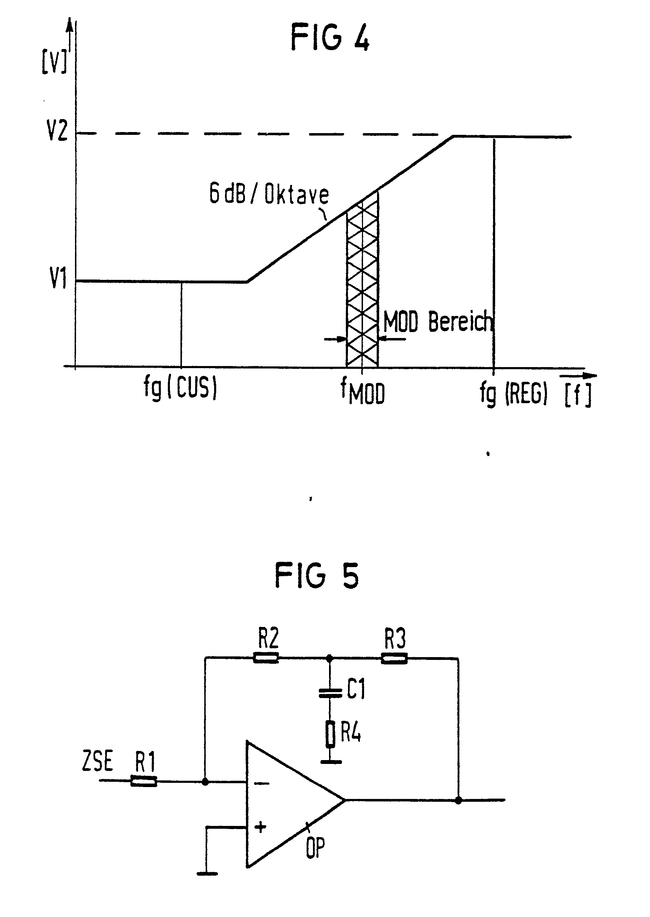

Bei den Zusatzsignalen niedriger Schrittgeschwindigkeit kann es sich sowohl um digitale als auch um analoge Signale handeln, diese Signale werden in der Preemphasisstufe einer Vorverzerrung unterworfen, wobei sich in Abhängigkeit von der Frequenz die Verstärkung von einem ersten Verstärkungswert V1 auf einen zweiten Verstärkungswert V2 erhöht und auf diesem konstant bleibt. Dies ist im Bodediagramm nach der Fig. 4 dargestellt. Es ist erkennbar, daß die Verstärkung im Bereich der Grenzfrequenz $f_g$ (CUS) auf dem niedrigen Wert V1 liegt und oberhalb dieses Wertes mit 6 dB pro Oktave ansteigt. Die Grenzfrequenz $f_g$ (CUS) des schmalbandigen Phasenregelkreises im sendeseitigen Codeumsetzer liegt bei sehr niedrigen Werten, da die Schleifenverstärkung in diesem Phasenregelkreis sehr niedrig gewählt wurde, so daß eine sehr schmalbandiges Filter mit einer Güte von etwa $10^5$ entsteht. Die Güte ist dabei das Verhältnis der Taktfrequenz zur doppelten Grenzfrequenz der Phasenregelschleife des sendeseitigen Codeumsetzers. Durch die Preemphasis wird mit ansteigender Signalfrequenz die Verstärkung und damit der Signalhub erhöht und das entsprechend verzerrte Signal zusammen mit dem Ausgangssignal des ersten Phasendiskriminators PD1 über den Analogsummierer AS, dem Steuersignaleingang des ersten Taktgenerators G1 zugeführt. Im Ausführungsbeispiel ergab sich die Grenzfrequenz $f_g$ (CUS) der Phasenregelschleife des sendeseitigen Codeumsetzers zu etwa 400 Hz, während der Modulationsträger der einzufügenden Zusatzsignale bei etwa 6 KHz lag und durch Phasenumtastung moduliert wurde, wobei die Ausgangssignale differenzcodiert waren. Im Bodediagramm nach der Fig. 4 steigt die Verstärkung bis zu einem Maximalwert V2 an, die zugehörige Frequenz liegt dabei unterhalb der Grenzfrequenz $f_g$ (REG) der Phasenregelschleifen der den Leitungsendgeräten nachgeschalteten Zwischenregeneratoren. Diese Grenzfrequenz liegt bei etwa 80 kHz, während der Schrittakt der umzucodierenden Signale bei einer Frequenz oberhalb 160 MHz lag. Die Modulationsfrequenz $f_{MOD}$ der einzufügenden Signale ist in gewissen Grenzen frei wählbar, als vorteilhaft hat sich das geometrische Mittel zwischen der Grenzfrequenz $f_g$ (CUS) der Phasenregelschleife des sendeseitigen Codeumsetzers und der Grenzfrequenz $f_g$ (REG) der Phasenregelschleifen der nachgeschalteten Zwischenregeneratoren erwiesen, da sich so der gleiche wirksame Abstand zwischen beiden Grenzfrequenzen ergibt. Da die Frequenz $f_{MOD}$ des Modulationsträgers sehr viel höher als die Grenzfrequenz der Phasenregelschleife des sendeseitigen Codeumsetzers liegt und die Verstärkung entsprechend dem Bodediagramm mit 6 dB pro Oktave ansteigt, ergibt sich bei einem amplitudenmodulierten Zusatzsignal auf der Übertragungsstrecke eine Phasenmodulation. Da die Frequenz des Modulationsträgers aber sehr viel unterhalb der Grenzfrequenz der Phasenregelschleife der nachfolgenden Zwischenregeneratoren liegt, ergibt sich durch die zwischen sendeseitigem und empfangsseitigem Leitungsendgerät befindliche Zwischenregeneratoren keine wesentliche Reduktion des erzeugten Phasenhubes, der die Information der Zusatzsignale trägt.

In der Fig. 5 ist ein Schaltbeispiel für die in Fig. 3 mit enthaltene Preemphasisstufe PES dargestellt. Kern der Preemphasisstufe ist ein Operationsverstärker OP, dessen nichtinvertierender Eingang + mit Bezugspotential und dessen invertierender Eingang — über einen ersten Widerstand R1 an den Eingang ZSE für das Zusatzsignal und außerdem über einen zweiten und einen dritten Widerstand R2, R3 mit dem Ausgang des Operationsverstärkers verbunden ist. In die Verbindung zwischen zweitem und drittem Widerstand ist die Reihenschaltung eines ersten Kondensators C1 und eines vierten Widerstandes R4 gegen Bezugspotential eingefügt. Bei niedrigen Signalfrequenzen ist der erste Kondensator C1 unwirksam, so daß die Gegenkopplung aus dem zweiten und dritten Widerstand R2, R3 voll wirksam ist und die Verstärkung des Operationsverstärkers auf dem niedrigen Verstärkungswert V1 hält. Bei höheren Frequenzen ergibt sich ein teilweises Abfliessen des Gegenkopplungsstromes über den ersten Kondensator C1 und den vierten Widerstand R4 nach Bezugspotential, so daß die Verstärkung in diesem Bereich ansteigt.

Bei hohen Frequenzen stellt der Kondensator C1 praktisch einen Kurzschluß dar, so daß in diesem Bereich das sich ergebende T-Glied durch die Widerstandswerte des zweiten, dritten und vierten Widerstandes R2, R3, R4 bestimmt wird und die Verstärkung in diesem Bereiche konstant bleibt und sich so der Verstärkungsverlauf entsprechend dem Bodediagramm nach der Fig. 4 ergibt.

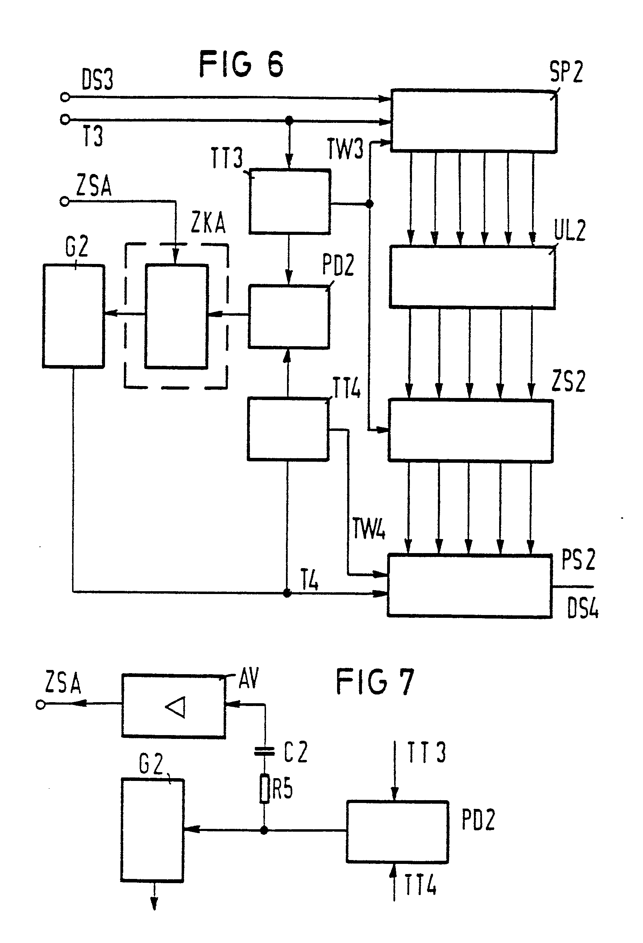

In der Fig. 6 ist der empfangsseitige Codeumsetzer CUE entsprechend Fig. 1 nochmals detaillierter dargestellt ; bis auf die Einrichtung zur Zusatzkanalauskopplung ZKA entspricht die Schaltung weitgehend dem empfangsseitigen Codeumsetzer CUE der Fig. 5 der DE-OS 29 44 377. Am Eingang DS3 stehen die umcodierten und übertragenen digitalen Signale an, die vom Empfangsregenerator ER amplituden- und zeitmäßig regeneriert worden sind, am Eingang T3 das entsprechende Taktsignal, das aus der Phasenregelschleife des Empfangsregenerators stammt. Beide Signale werden entsprechenden Eingängen eines zweiten Serien-Parallel-Wandlers SP2 zugeführt, außerdem wird das Taktsignal im dritten Taktwandler TT3 im Verhältnis 6 : 1 geteilt und dazu ein drittes Worttaktsignal TW3 erzeugt. Dieses Worttaktsignal wird an den einen Eingang eines zweiten Phasendiskriminators PD2, einem Worttakteingang des zweiten Serien-Parallel-Wandlers SP2 sowie einem entsprechenden Eingang eines zweiten Zwischenspeichers ZS2 aus 5 D-Flipflops zugeführt. Empfangsseitig werden die ankommenden Bits zu Sechsbitworten vom zweiten Serien-Parallel-Wandler SP2 zusammengefaßt, und mit dem dritten Worttaktsignal TW3 an entsprechende Eingänge einer zweiten Umcodierlogik UL2 abgegeben, die analog zur ersten Umcodierlogik UL1 ebenfalls aus einem ROM besteht, das entsprechend der Codetabelle programmiert ist. Entsprechend den ankommenden Worten mit 6 Bit erzeugen diese Umcodierlogiken gleichwertige Worte mit 5 Bit, die mit dem dritten Worttaktsignal TW3 an den zweiten Zwischenspeicher ZS2 abgegeben werden und an dessen Ausgängen zur Verfügung stehen. Der empfangsseitige Taktgenerator G2 erzeugt ein Taktsignal, das durch den vierten Taktteiler TT4 in ein viertes Worttaktsignal TW4 umgewandelt wird und an einen zweiten Eingang des zweiten Phasendiskriminators PD2 sowie an einen Worttakteingang eines zweiten Parallel-Serien-Wandlers PS2 abgegeben wird. Mit diesem vierten Worttaktsignal TW4 übernimmt der zweite Parallel-Serien-Wandler vom zweiten Zwischenspeicher ZS2 die erzeugten Worte mit je 5 Bit und gibt diese bitweise im Rhythmus des vom zweiten Taktgenerator G2 erzeugten Bittaktes T4 an einen Ausgang DS4 für die decodierten digitalen Signale ab.

In die Verbindung zwischen Ausgang des zweiten Phasendiskriminators PD2 und Steuersignaleingang des zweiten Taktgenerators G2 ist eine Zusatzkanalauskopplung ZKA eingefügt. Die Zusatzkanalauskopplung enthält einen Steuersignalausgang, der mit dem Steuersignaleingang des zweiten Taktgenerators G2 verbunden ist und außerdem einen Ausgang, an dem das übertragene Zusatzsignal ansteht und der mit dem Ausgang ZSA für das Zusatzsignal verbunden ist.

Die Zusatzkanalauskopplung ZKA ist zusammen mit dem zweiten Taktgenerator G2 und dem zweiten Phasendiskriminator PD2 in der Fig. 7 genauer dargestellt. Es ist ein zweiter Phasendiskriminator PD2 mit seinen Eingängen vorgesehen, die an Ausgänge des dritten bzw. des vierten Taktteilers TT3, TT4 angeschlossen sind. Mit dem Ausgang des zweiten Phasendiskriminators ist der Steuersignaleingang des zweiten Taktgenerators G2 und außerdem über die Reihenschaltung eines fünften Widerstandes R5 und eines zweiten Kondensators C2 der Eingang eines Auskoppelverstärkers AV verbunden. In der vom zweiten Phasendiskriminator PD2 erzeugten Regelspannung ist gleichzeitig die phasendemodulierte Spannung des Zusatzkanals, also das Zusatzsignal enthalten. Am Ausgang des Auskoppelverstärkers AV steht das trägerfrequente Zusatzsignal an, das über den Zusatzsignalausgang ZSA beispielsweise der einleitend erwähnten Einrichtung zur Kanalumschaltung zugeführt werden kann. Die Güte der Phasenregelschleife im empfangsseitigen Codeumsetzer wurde gleich der Güte der Phasenregelschleife des sendeseitigen Codeumsetzers gewählt. Da die Frequenz $f_{MOD}$ des Modulationsträgers sehr viel größer als die Grenzfrequenz der Phasenregelschleife des sendeseitigen und damit des empfangsseitigen Codeumsetzers ist, steht am Takteingang des vierten Taktteilers TT4 nur eine sehr schwach phasenmodulierte Taktschwingung an, so daß auch am Ausgang DS4 des zweiten Parallel-Serien-Wandlers PS2 ein nur sehr schwach phasenmoduliertes digitales Signal abgegeben wird.

**Patentansprüche**

1. Übertragungssystem für digitale Signale hoher Schrittgeschwindigkeit mit Zwischenregeneratoren und mit Leitungsendgeräten, die jeweils Phasenregelschleifen mit einem Taktgenerator (G) enthalten, bei dem zur Bildung eines Übertragungskanals für Zusatzsignale (ZSE) sendeseitig eine Phasenmodulation der Taktimpulse für die abgehenden digitalen Signale erfolgt, in dem dem Steuereingang eines im sendeseitigen Leitungsendgerät enthaltenden Taktgenerators über eine Addierstufe (AS) die Zusatzsignale zugeführt werden, wobei der eine Eingang der Addierstufe mit dem Ausgang eines in der sendeseitigen Phasenregelschleife enthaltenen Phasendiskriminators (PD1) und der andere Eingang der Addierstufe mit dem Eingang für die Zusatzsignale verbunden ist, bei dem empfangsseitig die Zusatzsignale aus der Regelspannung der Phasenregelschleife des empfangsseitigen Leitungsendgeräts ausgefiltert werden, und bei dem die Zwischengeneratoren für die durch die Zusatzsignale erzeugten Phasenschwankungen der digitalen Signalimpulse durchlässig sind, dadurch gekennzeichnet, daß die Leitungsendgeräte zur blockweisen Umcodierung der digitalen Signale jeweils einen sende- und einen empfangsseitigen Codeumsetzer aufweisen und diese Codeumsetzer jeweils zwischen einem empfangsseitigen Serien-Parallel-Wandler (SP) und einem sendeseitigen Parallel-Serien-Wandler (PS) eine Umcodierlogik (UL) und einen Zwischenspeicher (ZS) in frei wählbarer Folge enthalten, die Zusatzsignale über eine Preemphasisstufe (PES) in den sendeseitigen Codeumsetzer (CUS) eingekoppelt werden und dabei die Modulationsfrequenz ($f_{MOD}$), mit der die zu übertragenden Zusatzsignale vorliegen, wenigstens annähernd dem geometrischen Mittel zwischen der Grenzfrequenz $f_g$ (CUS) der schmalbandigen Phasenregelschleife im sendeseitigen Codeumsetzer (CUS) und der Grenzfrequenz $f_g$ (REG) der Phasenregelschleife der nachgeschaltete Zwischenregeneratoren entspricht, daß der Phasendiskriminator zur Wiedergewinnung der Zusatzsignale in einem empfangsseitigen Codeumsetzer (CUE) enthalten ist und daß die Güte der Phasenregelschleife in beiden Codeumsetzern (CUE, CUS) gegenüber einem Übertragungssystem ohne Übertragungskanal für Zusatzsignale wesentlich erhöht ist.

2. Übertragungssystem nach Patentanspruch 1, dadurch gekennzeichnet, daß die Preemphasisstufe einen Operationsverstärker (OP) enthält, dessen nichtinvertierender Eingang mit Bezugspotential verbunden ist und dessen invertierender Eingang über einen ersten Widerstand (R1) mit einer Quelle für die Zusatzsignale verbunden ist, daß der invertierende Eingang weiterhin über einen zweiten und einen dritten Widerstand (R2, R3) mit dem Ausgang des Operationsverstärkers (OP) verbunden ist und daß am die Verbindung zwischen zweitem und drittem Widerstand (R2, R3) einerseits die Reihenschaltung eines ersten Kondensators (C1) und eines vierten Widerstandes (R4) liegt, die andererseits mit Bezugspotential verbunden ist.

3. Übertragungssystem nach Patentanspruch 1, daudurch gekennzeichnet, daß die Schleifenverstärkung im Phasenregelkreis des sendeseitigen Codeumsetzers so gewählt ist, daß sich eine sehr schmalbandige Phasenschleife sehr hoher Güte (Q) ergibt und dabei die Güte (Q) den Quotient aus der Taktfrequenz und der doppelten Grenzfrequenz der Phasenregelschleife des sendeseitigen Codeumsetzers darstellt.

4. Übertragungssystem nach Patentanspruch 1, dadurch gekennzeichnet, daß der Modulationsträger ($f_{MOD}$) einer Phasenumtastung mit Differenzcodierung unterworfen wird.

## Claims

1. A transmission system for high bit rate digital signals comprising intermediate regenerators and line terminal devices, each of which includes phase regulating loops with a clock generator (G), wherein, in order to form a transmission channel for additional signals (ZSE), at the transmitting end a phase modulation of the clock pulses for the outgoing digital signals takes place, in which the control input of a clock generator included in the transmitting-end line terminal device is supplied with the additional signals via an adder stage (AS), where the first input of the adder stage is connected to the output of a phase discriminator (PD1) included in the transmitting-end phase regulating loop, and the other input of the adder stage is connected to the input for the additional signals, where at the receiving end the additional signals are filtered out of the regulating voltage of the phase regulating loop of the receiving-end line terminal device, and where the intermediate regenerators are conductive in respect of the phase fluctuations, produced by the additional signals, of the digital signal pulses, characterised in that for the block-by-block recoding of the digital signals, the line terminal devices each comprise a transmitting-end and a receiving-end code converter and these code converters respectively include, between a receiving-end series-parallel converter (SP) and a transmitting-end parallel-series converter (PS), a recoding logic unit (UL) and an intermediate store (ZS) in a freely selectable sequence, that the additional signals are input-coupled into the transmitting-end code converter (CUS) via a pre-emphasis stage (PES), where the modulation frequency ($f_{MOD}$) at which occur the additional signals which are to be transmitted, corresponds at least approximately to the geometric mean between the cut-off frequency $f_g$ (CUS) of the narrow-band phase regulating loop in the transmitting-end code converter (CUS) and the cut-off frequency $f_g$ (REG) of the phase regulating loop of the following intermediate regenerators, that for the restoration of the additional signals the phase discriminator is included in a receiving-end code converter (CUE) and that the quality of the phase regulating loop in the two code converters (CUE, CUS) is substantially greater than in a transmission system which has no transmission channel for additional signals.

2. A transmission system as claimed in patent claim 1, characterised in that the pre-emphasis stage includes an operational amplifier (OP) whose non-inverting input is connected to reference potential and whose inverting input is connected via a first resistor (R1) to a source for the additional signals, that the inverting input is also connected via a second and third resistor (R2, R3) to the output of the operational amplifier (OP), and that the connection point of the second and third resistors (R2, R3) is connected to the series arrangement of a first capacitor (C1) and a fourth resistor (R4) which on the other hand leads to reference potential.

3. A transmission system as claimed in patent claim 1, characterised in that the loop amplification in the phase regulating loop of the transmitting-end code converter is selected to be such as to produce a very narrow-band phase loop of a very high quality (Q), where the quality (Q) represents the quotient of the clock frequency and double the cut-off frequency of the phase regulating loop of the transmitting-end code converter.

4. A transmission system as claimed in patent claim 1, characterised in that the modulation carrier ($f_{MOD}$) is subjected to phase-shift keying with difference coding.

**Revendications**

1. Système de transmission pour signaux numériques à vitesse élevée de transfert binaire, comportant des régénérateurs intermédiaires et des appareils terminaux de ligne, qui contiennent respectivement des boucles de régulation de phase comportant un générateur de cadence (G), et dans lequel pour la formation d'un canal de transmission pour des signaux supplémentaires (ZSE), une modulation de phase des impulsions de cadence pour les signaux numériques de départ est réalisée côté émission par le fait que les signaux supplémentaires sont envoyés à l'entrée de commande d'un générateur de cadence qui est contenu dans l'appareil terminal de ligne situé côté émission, par l'intermédiaire d'un étage additionneur (AS), une entrée de l'étage additionneur étant reliée à la sortie d'un discriminateur de phase (PD1) contenu dans la boucle de régulation de phase située du côté émission, et l'autre entrée de l'étage additionneur étant reliée à l'entrée des signaux supplémentaires, et dans lequel, côté réception, les signaux supplémentaires sont extraits par filtrage de la tension de régulation de la boucle de régulation de phase de l'appareil terminal de ligne situé du côté réception, et dans lequel les régénérateurs intermédiaires laissent passer les variations de phase, produites par les signaux supplémentaires, des impulsions de signaux numériques, caractérisé par le fait que les appareils terminaux de ligne comportent respectivement un convertisseur de code situé du côté émission et un convertisseur de code situé du côté réception, pour réaliser le codage par blocs des signaux numériques, et que ces convertisseurs de code contiennent respectivement entre un convertisseur série-parallèle (SP) situé du côté réception et un convertisseur parallèle-série (PS) situé du côté émission, un circuit logique de codage (UL) et une mémoire intermédiaire (ZS), disposés selon une succession pouvant être choisie librement, que les signaux supplémentaires sont injectés par couplage dans le convertisseur de code (CUS) situé du côté émission, par l'intermédiaire d'un étage de préaccentuation (PES) et que la fréquence de modulation ($f_{MOD}$), que présentent les signaux supplémentaires devant être transmis, correspond au moins approximativement à la moyenne géométrique entre la fréquence limite $f_g$ (CUS) de la boucle de régulation de phase à bande étroite dans le convertisseur de code (CUS) situé du côté émission et la fréquence limite $f_g$ (REG) de la boucle de régulation de phase des régénérateurs intermédiaires branchés en aval, que le discriminateur de phase servant à récupérer les signaux supplémentaires est contenu dans un convertisseur de code (CUE) situé du côté réception et que le facteur de qualité de la boucle de régulation de phase présente dans les deux convertisseurs de code (CUE, CUS) est fortement accrue pa rapport à un système de transmission ne comportant pas de canal de transmission pour les signaux supplémentaires.

2. Système de transmission suivant la revendication 1, caractérisé par le fait que l'étage de préaccentuation contient un amplificateur opérationnel (OP) dont l'entrée non inverseuse est placée au potentiel de référence et dont l'entrée inverseuse est raccordée par l'intermédiaire d'une première résistance (R1) à une source des signaux supplémentaires, que l'entrée inverseuse est en outre reliée par l'intermédiaire d'une seconde et d'une troisième résistances (R2, R3) à la sortie de l'amplificateur opérationnel (OP) et que le circuit série formé d'un premier condensateur (C1) et d'une quatrième résistance (R4) est raccordé d'une part au point de jonction entre les seconde et troisième résistances (R2, R3) et est placé d'autre part au potentiel de référence.

3. Système de transmission suivant la revendication 1, caractérisé par le fait que l'amplification de boucle dans le circuit de régulation de phase du convertisseur de code situé du côté émission est choisie de telle sorte que l'on obtient une boucle de phase à bande très étroite, possédant un facteur de qualité élevé (Q) et que le facteur de qualité (Q) représente le quotient de la fréquence d'horloge par le double de la fréquence limite de la boucle de régulation de phase du convertisseur de code situé du côté émission.

4. Système de transmission suivant la revendication 1, caractérisé par le fait que la porteuse de modulation ($f_{MOD}$) est soumise à une manipulation de phase avec codage de différence.

# FIG 1

LS

EI · CUS · SV

F2an → [ EI ] → [ CUS ] → [ SV ] F1ab →

SI · CUE · ER

← F2ab [ SI ] ← [ CUE ] ← [ ER ] F1an ←

ZSA · ZSE

# FIG 2

# FIG 3

# FIG 4

6 dB / Oktave

MOD Bereich

fg (CUS)   f_MOD   fg (REG)   [f]

# FIG 5

# FIG 6

DS3

T3

TT3

TW3

SP2

ZSA

ZKA

G2

UL2

PD2

ZS2

TT4

TW4

T4

PS2

DS4

# FIG 7

ZSA

AV

C2

R5

G2

TT3

PD2

TT4